# EUROPEAN PATENT SPECIFICATION

(11) **EP 3 045 050 B1**
(45) Date of publication and mention of the grant of the patent: **02.01.2019**
(21) Application number: 14823757.1
(22) Date of filing: 03.09.2014
(51) Int. Cl.: A23K 50/42, A23K 40/30, A23K 40/10, A23K 20/158, A23K 50/45

(54) **PET FOOD PRODUCTION METHOD AND PET FOOD**
HERSTELLUNGSVERFAHREN FÜR HAUSTIERFUTTER UND HAUSTIERFUTTER
PROCÉDÉ DE FABRICATION D'ALIMENTS POUR ANIMAUX DE COMPAGNIE, ET ALIMENT POUR ANIMAUX DE COMPAGNIE

(30) Priority: 12.09.2013 JP 2013189474
(43) Date of publication of application: 20.07.2016
(73) Proprietor: Unicharm Corporation, Ehime 799-0111 (JP)
(72) Inventor: ICHIHASHI, Masaki, Itami-shi Hyogo 664-0831 (JP); YAMAMOTO, Junichi, Itami-shi Hyogo 664-0831 (JP)
(74) Representative: Staeger & Sperling Partnerschaftsgesellschaft mbB
(86) International application number: PCT/JP2014/073161
(87) International publication number: WO 2015/005501

(56) References cited:
- EP-A1- 1 825 762
- EP-A1- 2 255 676
- FR-A1- 2 198 707
- JP-A- S6 439 953
- JP-A- 2002 281 911
- JP-A- 2010 166 853
- US-A1- 2003 215 547
- US-A1- 2003 215 547

## Description

### TECHNICAL FIELD

The present invention relates to a pet food production method and a pet food.

### BACKGROUND ART

Conventionally, dry-type pet food has been favorably used from the viewpoint of easy feeding to pets and easy storability. The dry-type pet food is superior in nutritional balance. However, the dry-type pet food may be inferior in preference qualities to wet-type pet food, depending on a production method thereof. Given this, a method of producing dry-type pet food which is superior in preference qualities is demanded.

For example, Patent Document 1 discloses a pet food production method for providing a dry type pet food of superior preference, in which food pellets are prepared by granulating a pet food composition mixed of raw materials and then a coating powder layer, which is configured of a high melting point oil and fat, a low melting point oil and fat, and an umami (taste) powder, is formed on a surface of the food pellet.

Patent Document 1: Japanese Unexamined Patent Application Publication No. 2007-330180
Further prior art in this technical field is disclosed in documents US 2003/215547A1 and FR 2 198 707 A1.

### DISCLOSURE OF THE INVENTION

### Problems to be Solved by the Invention

However, in the production method disclosed in Patent Document 1, since the oil and fat and the umami (taste) powder are blended and aroma of the umami (taste) powder weakens, an effect of enhancing preference of pets is insufficient.

As described above, there is currently not a method of producing pet food having satisfactory preference qualities.

The present invention is made in view of the abovementioned situation and is aimed at providing a method of producing pet food with more superior preference qualities.

### Means for Solving the Problems

The present invention relates to a pet food production method. The method according to the invention includes the features according to claim 1 comprising a coating step of coating surfaces of granulated food grains with hardened oil and fat; and an attaching step of attaching a preference enhancing agent onto the surfaces of the food grains coated with the hardened oil and fat in the coating step.

A melting point of the hardened oil and fat is preferably 50 to 70°C.

The hardened oil and fat is preferably oil and fat that is hardened by hydrogenation.

The surfaces of granulated food grains are preferably coated with the hardened oil and fat that has been deodorized.

The attaching step takes place in an atmosphere of 30 to 60°C.

The hardened oil and fat is preferably made from animal oil and fat.

The hardened oil and fat is preferably made from vegetable oil and fat.

Further, the present invention relates to a pet food, wherein the pet food is produced by the pet food production method according to any one of claims 1 - 6.

### Effects of the Invention

The present invention can provide a method of producing pet food with superior preference qualities.

### BRIEF DESCRIPTION OF THE DRAWINGS

FIG. 1 is a diagram illustrating production steps of the pet food production method according to an embodiment of the present invention; and
FIG. 2 is a diagram schematically illustrating a cross section of the pet food produced according to the pet food production method according to the embodiment.

### PREFERRED MODE FOR CARRYING OUT THE INVENTION

A pet food production method according to an embodiment of the present invention is described in detail hereinafter; however, the present invention is not limited thereto, and can be changed and implemented as necessary to implement in the scope of the objective of the present invention.

The pet food in the present embodiment is a pet food for cats and dogs, including a so-called dry-type pet food with no greater than 12% by mass of moisture, and a so-called semi-dry (semi-raw) type pet food with greater than 12% by mass and no greater than 16% by mass of moisture.

### < Production Method of Pet Food >

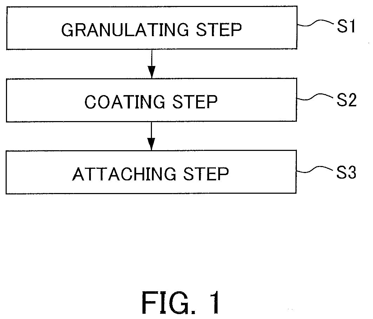

The pet food production method of the present embodiment includes, as illustrated in FIG. 1, a granulating step S1, a coating step S2, and an attaching step S3.

The granulating step S1 is a step of granulating a kneaded food product, which is obtained by kneading pet food raw materials, to thereby obtain food grains.

In the granulating step S1, first, the pet food raw materials are kneaded to obtain the kneaded food product.

As the pet food raw materials used in the pet food production method of the present embodiment, materials that are commonly used as pet food raw materials can be exemplified. Important nutrients contained in the raw materials are protein and carbohydrate.

As the protein, plant-derived protein, animal-derived protein, or a mixture thereof can be exemplified. More specifically, as the plant-derived protein, protein derived from gluten, wheat, soy, rice, corn and the like can be exemplified. As the animal-derived protein, protein derived from muscle and organs of beef, pork, chicken and fish; protein derived from milk; or a mixture thereof can be exemplified. These proteins may also contain fat, vitamins, iron and the like and can be used as a nutritional source.

As the carbohydrate, carbohydrate of grains such as corn, wheat, barley, oat, rice, soy and the like can be preferably exemplified. These grains may contain, in addition to carbohydrate, protein, ash, minerals, vitamins and the like and can be used as a nutritional source.

In addition to the protein and the carbohydrate, vitamins, minerals, amino acids, sugars, salts, fat, extract of animal protein, and the like can be added as the pet food raw materials.

A method of kneading the pet food raw materials is not particularly limited. As the method of kneading the pet food raw materials, a known method of pulverizing the pet food raw materials with a pulverizer and then kneading with a mixer and the like can be employed.

It should be noted that viscosity can be adjusted by adding liquid such as water, oil, and the like upon kneading the pet food raw materials.

The kneaded food product obtained by kneading the pet food raw materials is then granulated.

In the granulating step S1, a method of granulating the kneaded food product is not particularly limited; however, granulation by a method using an extruder is preferable.

As used herein, "to granulate" means to shape the kneaded food product into a shape and size suitable for pet's consumption. In the present embodiment, the shape of the food grains is not particularly limited. As the shape of the food grains, a spherical shape, a pillar shape, a doughnut shape, a plate shape, a go-stone shape (flat circular shape) and the like can be exemplified. With regard to the size, the food grains to be shaped can be either small grains allowing pets to consume in one bite or large grains allowing pets to bite thereinto for multiple times.

The shape of the food grains can also be in a plate shape, a pillar shape, or a tube shape which are too large for pets to consume as is. In this case, it is preferable to divide the food grains into smaller pieces of a shape that facilitates consumption by pets, after any one of the subsequent drying process and baking step.

By performing a heating process during molding (shaping) and granulation of the kneaded food product, starch components in the kneaded food product can be gelatinized. By the gelatinization, flavor and texture of the pet food obtained are improved and the pet food becomes easier to digest.

A temperature and duration of the heating process upon granulating the kneaded food product are not particularly limited; however, it is preferable that the temperature is at least 70°C and no greater than 150°C from the viewpoint of smooth gelatinization of carbohydrate in the kneaded food product. The duration of the heating process is preferably 1 to 10 minutes and more preferably 3 to 6 minutes.

A temperature and duration of the heating process of at least 70°C and at least 1 minute can sufficiently accelerate the gelatinization. A temperature and duration of the heating process of no greater than 150°C and no greater than 10 minutes can prevent difficulty in granulation of the food grains due to excessive heating of the food grains. The temperature of the heating process is more preferably 80 to 100°C.

A treatment for drying the food grains takes place preferably after granulating the kneaded food product. By drying the granulated food grains, generation of aroma components can be facilitated.

A method of drying the food grains is not particularly limited, and known methods such as a method of letting dry, a method of drying by blowing hot air, a method of drying by reduced pressure, and a method of freeze-drying can be employed. Among these drying methods, the method of drying by blowing hot air can further improve flavor of the pet food and is preferable.

A temperature of the food grains or a temperature of the hot air to be blown onto the food grains upon drying of the food grains is not particularly limited. The temperature of the food grains or the temperature of the hot air to be blown onto the food grains upon drying of the food grains is preferably at least 60°C and no higher than 150°C. A temperature of the food grains or a temperature of the hot air to be blown onto the food grains upon drying of the food grains of at least 60°C and no higher than 150°C can prevent excessive heating of the food grains.

A temperature and duration of at least 60°C and at least 1 minute can dry the food grains in a relatively short period of time. A temperature and duration of no greater than 150°C and no greater than 30 minutes can prevent excessive heating of the food grains. The drying process is preferably performed using a dryer, with hot air of 70 to 90°C for 10 to 30 minutes.

It should be noted that the temperature of the heating process and the temperature of the drying process can be either the same or different.

In the present embodiment, the moisture content of the food grains to be subjected to the coating step (described later) is preferably 6.0 to 12.0% by mass. In addition, by making the moisture content of the food grains within the above range, flavor of the pet food can be improved.

The coating step S2 is a step of coating surfaces of food grains, which is granulated in the granulating step S1, with hardened oil and fat (refer to FIG. 1).

"Oil and fat" refers to glycerin esters of fatty acid (neutral fat), and "hardened oil and fat" refers to oil and fat in which the oil and fat containing a large amount of glycerin esters of unsaturated fatty acid having a relatively low melting point, is processed by a hardening treatment to reduce a ratio of unsaturated bonds and raise the melting point, and it is solid at ambient temperature.

The type of the hardened oil and fat used to coat the surfaces of the glanulated food grains is not particularly limited and animal oil and fat as well as vegetable oil and fat can be exemplified. As the animal oil and fat, beef tallow, lard, chicken fat, fish fat and the like can be exemplified. Known meal extracts such as a chicken extract (extract derived from chicken meat) or a fish extract (extract derived from fish meat) can be added to the oil and fat. It is preferable to use animal oil and fat as a raw material for the hardened oil and fat, from the viewpoint of enhancing preference of the pet food. Alternatively, superior preference can also be achieved by using vegetable oil and fat as a raw material for the hardened oil and fat, especially in a case of a pet food for cats.

As a method for hardening the oil and fat, hydrogenation can be exemplified.

A hardening treatment of the oil and fat by hydrogenation is preferable since hardened oil and fat can be obtained without a loss of oil and fat. In the hardening treatment of the oil and fat by hydrogenation, complete hydrogenation (extreme hardening) of unsaturated fatty acid of the oil and fat is preferable. By extreme hardening of the oil and fat, hardened oil and fat without trans-fatty acid can be prepared.

A melting point of the hardened oil and fat used to coat the surfaces of the granulated food grains is preferably 50 to 70°C. A melting point of the hardened oil and fat of lower than 50°C may cause the preference enhancing agent on the surface of the food grain to be trapped in the hardened oil and fat during the attaching step S3 (described later) and aroma of the preference enhancing agent weakens, tending to reduce preference of the pet food. On the other hand, a melting point of the hardened oil and fat of higher than 70°C may make attachment of the preference enhancing agent onto the surface of the food grain difficult, also tending to reduce preference of the pet food. A melting point of oil and fat is measured according to Standard Methods for the Analysis of Fats, Oils and Related Materials, 2003 Edition (compiled by Japan Oil Chemists' Society).

An iodine value of the hardened oil and fat used to coat the surfaces of the granulated food grains is no greater than 2. An iodine value of greater than 2 tends to lower a melting point of the hardened oil and fat. A lower melting point of the hardened oil and fat may cause the preference enhancing agent on the surface of the food grain to be trapped in the hardened oil and fat during the attaching step S3 (described later) and aroma of the preference enhancing agent tends to weaken. An iodine value of oil and fat is measured according to Standard Methods for the Analysis of Fats, Oils and Related Materials, 2003 Edition (compiled by Japan Oil Chemists' Society).

The hardened oil and fat used to coat the surfaces of the granulated food grains is used in the coating step S2 preferably after deodorizing. As a method for deodorizing the hardened oil and fat, steam distillation can be exemplified.

As the hardened oil and fat used to coat the surfaces of the granulated food grains, either a single kind of hardened oil and fat or a mixture of two or more kinds of hardened oil and fat can be used. In addition, non-hardened oil and fat, in such an amount that no substantial effect is produced, can be blended into the hardened oil and fat used to coat the surfaces of the granulated food grains. More specifically, if the non-hardened oil and fat is approximately no greater than 5 parts by mass with respect to 100 parts by mass of the hardened oil and fat, the non-hardened oil and fat does not substantially influence the hardened oil and fat.

A method of coating the granulated food grains with the hardened oil and fat (attaching the hardened oil and fat) is not particularly limited. As a method of coating the granulated food grains with the hardened oil and fat, a method of stirring heated and fluidized hardened oil and fat with the food grains in a coating reel can be exemplified.

Before or after stirring, by maintaining a state in which the fluidized hardened oil and fat is attached to the surface of the food grains for a predetermined period of time (for example 1 to 30 minutes), it is possible to impregnate a part of the hardened oil and fat to the inside of a hardened oil and fat layer. It is preferable to impregnate only a shallow region near the surface of the food grains with the hardened oil and fat, in order to prevent deterioration of preference of the pet food due to the hardened oil and fat penetrating into a central part of the food grain.

An amount of the hardened oil and fat used to coat the surfaces of the food grains is 3 to 8% by mass with respect to a total mass of the food grains before coating with the hardened oil and fat. An amount of the hardened oil and fat used in the coating step S2 to coat the surfaces of the food grains of smaller than 3% by mass with respect to a total mass of the food grains tends to reduce efficiency of attachment of the preference enhancing agent onto the surface of the food grain in an attaching step S3 to be described later, while the amount of greater than 8% by mass tends to bond readily between the food grains due to the hardened oil and fat on the surface. The amount of addition of the hardened oil and fat can also be adjusted appropriately according to caloric design.

In the coating step S2, the hardened oil and fat is preferably heated to a temperature higher than a melting point of the hardened oil and fat (for example 65 to 80°C) and melted prior to addition to the food grains, and then added to the food grains. In addition, upon coating of the food grains with the hardened oil and fat, the food grains is preferably coated with the hardened oil and fat in an atmosphere of a temperature higher than a melting point of the hardened oil and fat (for example 65 to 80°C), Heating of the hardened oil and fat prior to addition to the food grains and heating during coating of the food grains with the hardened oil and fat are primarily for avoid solidification of the hardened oil and fat during the coating step S2.

The attaching step S3 is a step of attaching the preference enhancing agent onto the surfaces of the food grains coated with the hardened oil and fat in the coating step S2 (FIG. 1).

By attaching the preference enhancing agent onto the surfaces of the food grains coated with the hardened oil and fat, the most part of the preference enhancing agent is exposed on an outermost layer of the pet food without being trapped in the hardened oil and fat layer. The majority of the preference enhancing agent exposed on the outermost layer of the pet food improves aroma and preference of the pet food.

The preference enhancing agent in the attaching step S3 refers to a powdery substance including mainly of amino acids that is added to the pet food for improving preference qualities. As the preference enhancing agent to be attached onto the surfaces of the food grains coated with the hardened oil and fat, a substance including mainly of amino acids obtained by decomposing protein of chicken meat.

A method of attaching the preference enhancing agent onto the surfaces of the food grains coated with the hardened oil and fat is not particularly limited. As a method of attaching the preference enhancing agent onto the surfaces of the food grains coated with the hardened oil and fat, a method of stirring the food grains coated with the hardened oil and fat with the preference enhancing agent in a coating reel can be exemplified.

An amount of the preference enhancing agent attached onto the surfaces of the food grains coated with the hardened oil and fat is 1 to 5% by mass with respect to a total mass of the food grains coated with the hardened oil and fat. An amount of the preference enhancing agent attached onto the surfaces of the food grains coated with the hardened oil and fat of smaller than 1% by mass with respect to a total mass of the food grains coated with the hardened oil and fat, tends to lower preference qualities, and an amount greater than 5% by mass tends to cause the preference enhancing agent to fall without attaching to the food grains coated with the hardened oil and fat, due to an excessive amount of the preference enhancing agent.

The attaching step S3 takes place in an atmosphere of 30 to 60°C. If the attaching step S3 takes place in an atmosphere of lower than 30°C, it tends to be difficult to attach the preference enhancing agent onto the surface of the food grain, since the hardened oil and fat on the surface of the food grain is solidified. If the attaching step S3 takes place in an atmosphere of higher than 60°C, the preference enhancing agent is mixed with the hardened oil and fat on the surface of the food grains and the aroma tends to weaken. The attaching step S3 preferably takes place in an atmosphere of 40 to 50°C. A temperature at which the attaching step S3 takes place is a temperature of the inside of an apparatus for performing the attaching step S3, such as a coating reel.

### < Pet Food >

A pet food according to an embodiment of the present invention is a pet food produced by the pet food production method described above.

In a case of coating the surface of the food grain with the oil and fat and the preference enhancing agent in order to improve preference qualities of the pet food, coating with the oil and fat blended with the preference enhancing agent in advance weakens aroma of the preference enhancing agent. In addition, in a case of coating the surface of the food grain with oil and fat having a low melting point and then attaching the preference improving agent onto the surface of the food grain coated with the oil and fat, the oil and fat is fluid at ambient temperature and the most part of the preference enhancing agent is trapped in the hardened oil and fat layer, thereby weakening aroma of the preference enhancing agent.

In the pet food according to the present embodiment, as described heretofore, the surfaces of the food grains are coated with the hardened oil and fat and then the preference enhancing agent is attached onto the surfaces of the food grains coated
with the hardened oil and fat.

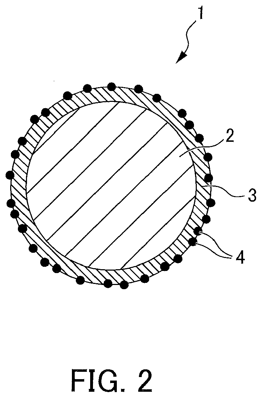

FIG. 2 is a diagram schematically illustrating a cross-section of the pet food 1 of the present embodiment. As illustrated in FIG. 2, the pet food 1 is configured of a food grain 2, a hardened oil and fat layer 3 coating a surface of the food grain 2, and a preference enhancing agent 4 attached onto an outermost layer of the hardened oil and fat layer 3. Since the hardened oil and fat has a high melting point, the majority of the preference enhancing agent 4 is exposed on an outermost layer of the pet food 1 without being trapped in the hardened oil and fat layer 3. The majority of the preference enhancing agent exposed on the outermost layer of the pet food 1 improves aroma and preference qualities of the pet food 1 according to the present embodiment.

As the moisture content of the pet food, the following range can be exemplified. The moisture content of the pet food according to the embodiment of the present invention is preferably 6 to 12% by mass.

A moisture content of at least 6% by mass can prevent the pet food from being extremely hard or extremely too fragile to maintain its shape. In addition, a moisture content of no greater than 12% by mass can improve flavor of the pet food and consumption by pets.

The pet food of the present invention can be produced by using conventionally known ingredients, according to the above described method.

The pet food of the present invention is consumed by various animals; however, cats or dogs like the pet food and particularly dogs like the pet food.

In order to inform pet owners that the pet food of the present invention is suitable for dogs and cats, when the pet food is packaged for sale, the package can indicate that the pet food is suitable for dogs and cats.

In the present Specification and Claims, "pet" designates animals kept by humans. In a more limited sense, a pet is an animal cherished by an owner.

### EXAMPLES

The present invention is described more in detail hereinafter presenting Examples; however, the present invention is not limited to these Examples.

### < Production of Pet Food according to Examples 1 and 2 and Comparative Examples 1 to 3 >

A production method of the pet food according to Examples 1 and 2 and Comparative Examples 1 to 3 is described hereinafter; the only difference in production among Examples 1 and 2 and Comparative Examples 1 to 3 is a type of oil and fat used for coating of the food grains.

A kneaded food product was obtained by: blending cereals, meats, animal oil and fat, beans, vegetables, fishes, vitamins and minerals, which are pet food raw materials, in a composition shown in Table 1; and kneading by a mixer.

The cereals include corn, wheat flour, corn gluten meal, bran, corn gluten feed, and the like. The meats include chicken meal, chicken extract and the like. The fishes include fish meal and the like.

### [Table 1]

**Table 1**

| Raw Materials | Composition (mass %) |
|---|---|
| Cereals | 67 |
| Meats | 14 |
| Animal oil & fat | 8 |
| Beans | 6 |
| Vegetables | 2 |
| Fishes | 2 |
| Vitamins & minerals | 1 |
| Total | 100 |

The kneaded product thus obtained was granulated to make food grains of 10 mm in diameter, by using an extruder. During this, a heating process at 90°C for 3 minutes was performed to gelatinize starch components.

The food grains thus obtained were subjected to a drying process using a dryer with hot air of 140°C for 15 minutes, to thereby obtain respective food grains having moisture contents shown in Table 5.

Thereafter, the respective dried food grains and oil and fat (beef tallow), which had been melted by heating to 70°C, in an amount of 5% by mass with respect to a mass of the food grains, were fed to a coating reel and blended, to thereby coat the food grains with the oil and fat. Details of the oil and fat used for Examples 1 and 2 and Comparative Examples 1 to 3 are shown below.

A melting point and an iodine value of oil and fat were measured according to Standard Methods for the Analysis of Fats, Oils and Related Materials, 2003 Edition (compiled by Japan Oil Chemists' Society).

### [Oil and Fat used for Coating (Beef Tallow)]

Example 1: Deodorized hardened beef tallow (obtained by hardening crude beef tallow having a melting point of 36°C by hydrogenation and deodorizing by steam distillation. Melting point: 61°C, Iodine value: 0.89)
Example 2: Deodorized hardened beef tallow (obtained by hardening crude beef tallow having a melting point of 40°C by hydrogenation and deodorizing by steam distillation. Melting point: 53°C, Iodine value: 2)

Comparative Example 1: Crude beef tallow (Melting point: 36°C, Iodine value: 56)
Comparative Example 2: Crude beef tallow (Melting point: 40°C, Iodine value: 52)
Comparative Example 3: Blended beef tallow with hardened beef tallow (obtained by hardening crude beef tallow having a melting point of 36°C by hydrogenation.
Melting point: 61°C) and crude beef tallow (Melting point: 36°C) in a mass ratio of 1:1

Thereafter, while keeping the inside of the coating reel at 40°C, a preference enhancing agent (powdered animal-derived umami (taste) extract such as chicken extract, fish extract and the like) in an amount of 3% by mass with respect to a total mass of the food grains coated with the hardened oil and fat was added, to thereby attaching the preference enhancing agent onto surfaces of the food grains coated with oil and fat. The preference enhancing agent attached onto the surfaces of the food grains coated with oil and fat is a substance including mainly of amino acids.

Respective pet foods of Examples 1 and 2 and Comparative Examples 1 and 3 were thus obtained by the above described production method.

### < Evaluation of Preference Qualities >

The preference qualities (consumption) of the pet foods of Examples 1 and 2 and Comparative Examples 1 and 3 thus produced were evaluated by the following method.

### (Test 1)

In order to determine which of the pet foods of Example 1 and Comparative Example 1 has higher preference qualities, the test was conducted over 2 days with 10 dogs (males and females of 2 to 10 years old) as subjects.

On the first day, each of the dogs was fed simultaneously with the pet foods, 250 g each, the first one from the observer's left and the second one from the observer's right, and 1 minute later amounts consumed by dogs were measured.

Based on a total weight of the pet food consumed by a given dog on the first day, a consumed amount of the pet food of Example and a consumed amount of the pet food of Comparative Example were obtained in percent. A result of the first day was obtained by averaging the amounts in percent obtained from 10 subject dogs.

On the second day, each of the dogs was fed simultaneously with the pet foods, 250 g each, the first one from the observer's right and the second one from the observer's left, and 1 minute later amounts consumed by dogs were measured.

Based on a total weight of the pet food consumed by a given dog on the second day, a consumed amount of the pet food of Example and a consumed amount of the pet food of Comparative Example were obtained in percent. A result of the second day was obtained by averaging the amounts in percent obtained from 10 subject dogs.

Lastly, a ratio of consumed amounts (preference score) was obtained by averaging the results of the first day and the second day. Results are shown in Table 2. A higher value of preference indicates that consumption by the subject dogs was more favorable.

### (Test 2)

The similar test to Test 1 was conducted except for using the pet food of Example 2 instead of the pet food of Example 1, and using the pet food of Comparative Example 2 instead of the pet food of Comparative Example 1. Results thereof are also shown in Table 2.

### (Test 3)

The similar test to Test 1 was conducted except for using the pet food of Comparative Example 1 instead of the pet food of Example 1, and using the pet food of Comparative Example 3 instead of the pet food of Comparative Example 1. Results thereof are also shown in Table 2.

### [Table 2]

Table 2

| | | | |
|---|---|---|---|
| Preference Score (Ratio) | Example 1 : Comp. Example 1 | Example 2 : Comp. Example 2 | Comp. Example 1: Comp. Example 3 |
| | 60:40 | 71:29 | 45:55 |

In Table 2, a higher value of preference score indicates that consumption was more favorable.

The results of Tests 1 and 2 showed that the pet food of Examples 1 and 2 were superior in preference qualities to the pet food of Comparative Examples 1 and 2. These facts also showed that the coating step of the present invention of coating the food grains with the hardened oil and fat contributes to improvement of the preference qualities of pet foods.

The results of Test 3 showed that the pet foods of Comparative Example 1 and Comparative Example 3 had no difference in preference qualities. These facts showed that coating of the granulated food grains with a blend of low melting point oil and fat with high melting point (hardened) oil and fat brings out almost no improvement in the preference qualities.

### EXPLANATION OF REFERENCE NUMERALS

1 Pet food
2 Food grains
3 Hardened oil and fat layer
4 Preference enhancing agent

## Claims

1. A pet food production method comprising:
a coating step of coating surfaces of granulated food grains (2) with hardened oil and fat (3); and
an attaching step of attaching a preference enhancing agent (4) onto the surfaces of the food grains (2) coated with the hardened oil and fat (3) in the coating step,
the method is **characterized in that**
an amount of the hardened oil and fat (3) used to coat the surfaces of the food grains (2) is 3 to 8% by mass with respect to a total mass of the food grains before coating with the hardened oil and fat (3);
an iodine value of the hardened oil and fat (3) used to coat the surfaces of the granulated food grains (2) is no greater than 2;
the attaching step takes place in an atmosphere of 30 to 60°C, and
an amount of the preference enhancing agent (4) attached onto the surfaces of the food grains coated with the hardened oil and fat is 1 to 5% by mass with respect to a total mass of the food grains coated with the hardened oil and fat.

2. The pet food production method according to claim 1, wherein
a melting point of the hardened oil and fat (3) is 50 to 70°C.

3. The pet food production method according to claim 1 or 2, wherein
the hardened oil and fat (3) is oil and fat that is hardened by hydrogenation.

4. The pet food production method according to any one of claims 1 to 3, wherein
the surfaces of granulated food grains (2) are coated with the hardened oil and fat (3) that has been deodorized.

5. The pet food production method according to any one of claims 1 to 4, wherein
the hardened oil and fat (3) is made from animal oil and fat.

6. The pet food production method according to any one of claims 1 to 4, wherein
the hardened oil and fat (3) is made from vegetable oil and fat.

7. A pet food (1), wherein the pet food is produced by the pet food production method according to any one of claims 1 to 6.

## Patentansprüche

1. Ein Herstellungsverfahren für Haustierfutter umfassend:
einen Beschichtungsschritt zur Beschichtung von Oberflächen von granulierten Futterkörnern (2) mit gehärtetem Öl und Fett (3); und
einem Befestigungsschritt zur Befestigung eines Präferenzverstärkungsmittels (4) auf den Oberflächen der Futterkörner (2), die mit dem gehärteten Öl und Fett (3) in dem Beschichtungsschritt beschichtet wurden,
das Verfahren ist **dadurch gekennzeichnet, dass**
eine Menge des gehärteten Öls und Fetts (3), die zum Beschichten der Oberflächen der Futterkörner (2) benutzt wird, 3 bis 8 Gewichtsprozent hinsichtlich einer Gesamtmasse der Futterkörner vor Beschichtung mit dem gehärteten Öl und Fett (3) beträgt;
eine Jodzahl des gehärteten Öls und Fetts (3), das zum Beschichten der Oberflächen der granulierten Futterkörner (2) genutzt wird, nicht größer als 2 ist;
der Befestigungsschritt in einer Atmosphäre von 30 bis 60 °C stattfindet, und
eine Menge des Präferenzverstärkungsmittels (4), das auf den Oberflächen der Futterkörner, die mit dem gehärteten Öl und Fett beschichtet sind, befestigt ist, 1 bis 5 Gewichtsprozent hinsichtlich einer Gesamtmasse der Futterkörner, die mit dem gehärteten Öl und Fett beschichtet sind, beträgt.

2. Das Herstellungsverfahren für Haustierfutter gemäß Anspruch 1, wobei ein Schmelzpunkt des gehärteten Öls und Fetts (3) 50 bis 70 °C beträgt.

3. Das Herstellungsverfahren für Haustierfutter gemäß Anspruch 1 oder 2, wobei das gehärtete Öl und Fett (3) Öl und Fett ist, das durch Hydrierung gehärtet ist.

4. Das Herstellungsverfahren für Haustierfutter gemäß einem der Ansprüche 1 bis 3, wobei die Oberflächen der granulierten Futterkörner (2) mit dem gehärteten Öl und Fett (3), das deodoriert wurde, beschichtet sind.

5. Das Herstellungsverfahren für Haustierfutter gemäß einem der Ansprüche 1 bis 4, wobei das gehärtete Öl und Fett (3) aus tierischem Öl und Fett hergestellt ist.

6. Das Herstellungsverfahren für Haustierfutter gemäß einem der Ansprüche 1 bis 4, wobei das gehärtete Öl und Fett (3) aus pflanzlichem Öl und Fett hergestellt ist.

7. Ein Haustierfutter (1), wobei das Haustierfutter mittels des Herstellungsverfahrens für Haustierfutter gemäß einem der Ansprüche 1 bis 6 hergestellt ist.

## Revendications

1. Procédé de production d'aliments pour animaux de compagnie comprenant:
une étape de revêtement pour revêtir les surfaces de grains d'alimentation granulés (2) avec de l'huile et de la graisse durcies (3); et
une étape de fixation pour fixer un moyen d'amplification préférentielle (4) sur les surfaces des grains de produits alimentaires (2) ont été revêtues à l'étape de revêtement de l'huile et de graisse durcie (3),
la méthode est **caractérisée en ce que**, une quantité de l'huile et de graisse durcie (3), qui est utilisé pour revêtir les surfaces des grains de produits ali mentaires (2) est 3 à 8 pour cent en poids par rapport à la masse totale des granulés alimentaires avant le revêtement avec de l'huile et de graisse durcie (3);
un indice d'iode de l'huile et de la graisse durcie, (3) pour revêtir les surfaces des grains de granulés alimentation (2) est utilisé, ne soit pas supérieur à 2;
l'étape de fixation a lieu dans une atmosphère de 30 à 60°C, et
une quantité du moyen d'amplification préférentielle (4) qui est fixé sur la surface des granulés alimentaires, qui sont revêtues avec de l'huile et de graisse durcie est 1 à 5 pour cent en poids par rapport à la masse totale des granulés alimentaires, qui sont revêtues avec le poids de l'huile et de la graisse durcie.

2. Procédé de fabrication d'aliments pour animaux de compagnie selon la revendication 1, dans lequel un point de fusion de l'huile et de la graisse durcie (3) est de 50 à 70°C.

3. Procédé de fabrication d'aliments pour animaux de compagnie selon la revendication 1 ou 2, dans lequel l'huile durcie et de graisse (3) est durci par hydrogénation.

4. Procédé de fabrication d'aliments pour animaux de compagnie selon l'une quelconque des revendications 1 à 3, dans lequel les surfaces des grains d'alimentation qui sont revêtues avec l'huile et la graisse durcie (3) a été désodorisé.

5. Procédé de fabrication d'aliments pour animaux de compagnie selon l'une quelconque des revendications 1 à 4, dans lequel l'huile et de graisse durcie (3) est fabriqué à partir de graisses animales et d'huile animales.

6. Procédé de fabrication d'aliments pour animaux de compagnie selon l'une quelconque des revendications 1 à 4, dans lequel l'huile et de graisse durcie (3) est constitué d'huile végétale et de la graisse végétale.

7. Aliment pour animaux de compagnie (1), dans lequel l'aliment pour animaux de compagnie est produit par le procédé de production d'aliments pour animaux de compagnie selon l'une quelconque des revendications 1 à 6.
